# EUROPEAN PATENT APPLICATION

(11) **EP 1 814 056 A1**
(43) Date of publication of application: **01.08.2007**
(21) Application number: 07101152.2
(22) Date of filing: 25.01.2007
(51) Int. Cl.: G06F 21/06, G01R 31/28

(54) **Connector ports for anti-tamper**

(30) Priority: 25.01.2006 US 339023
(71) Applicant: Honeywell International Inc., Morristown, NJ 07962 (US)
(72) Inventor: Dalzell, William J., Parrish, FL 34219 (US); Dare, Patricia H., Lutz, FL 33558 (US); Masson, Simeon, Tampa, FL 33626 (US)
(74) Representative: Haley, Stephen

(57) **Abstract**

An anti-tamper system mending an interface key having a first surface and a second surface, the interface key adapted to mate with a test connector at the first surface and adapted to mate with an interface port in a chassis at the second surface. One or more electronic circuit boards in the chassis are adapted to be tested via the test connector, the interface key and the interface port, and wherein the interface port includes dummy receptacles that mate with dummy pins in the interface key. The dummy receptacles are adapted to obfuscate a tampering event on protected electronic circuit boards housed in the chassis.

## Description

The boards and chips which comprise electrical and electro-optical systems within boxes or chassis often include proprietary circuit designs. In some cases the board and/or chip manufacturers integrate the board and/or chip into systems, test the system via a test access port and sell the system to a customer. The access port is available to the customer that purchased the system.

In other cases, the board and/or chip manufacturers provide customers with a test access port that the customer uses to integrate the board and/or chip into their system. Once the customer has integrated their system, they may sell the system to yet another customer.

To facilitate the test and integration of boards and/or chips, the Joint Test Access Group (JTAG) has developed standards for test access ports that interface chips and boards in commercial and military products, such as IEEE 1149.1 and IEEE 1532. The port can be used by reverse engineers to probe the chips and boards to obtain the proprietary information about design and/or operation of the probed chips and boards. Ethernet test access ports are also available and are likewise susceptible to reverse engineering.

If the information that a reverse engineer obtains by reverse engineering proprietary boards and/or chips is related to advanced military applications, the information leak may endanger national security. If the information that a reverse engineer obtains by reverse engineering proprietary boards and/or chips is related to commercial applications, the information leak could be used to undermine the economic security of the commercial vendor.

For the reasons stated above and for other reasons stated below which will become apparent to those skilled in the art upon reading and understanding the specification, there is a need in the art to limit access to proprietary boards and chips via a test access port to authorized personnel,

The embodiments of the present invention provide methods and systems for preventing reverse engineering of electronic circuit board via a test access port and will be understood by reading and studying the following specification.

A first aspect of the present invention provides an anti-tamper system including an interface key having a first surface and a second surface, the interface key adapted to mate with a test connector at the first surface and adapted to mate with an interface port in a chassis at the second surface. One or more electronic circuit boards in the chassis are adapted to be tested via the test connector, the interface key and the interface port, and wherein the interface port includes dummy receptacles that mate with dummy pins in the interface key. The dummy receptacles are adapted to obfuscate a tampering event on protected electronic circuit boards housed in the chassis.

A second aspect of the present invention provides a method to prevent tampering with electronic circuit boards housed in a chassis. The method includes mating a test connector to a first surface of an interface key, plugging the interface key into an interface port in the chassis, so that a second surface of the interface key is adjacent to the interface port. The method further includes removing the interface key from the interface port after testing of the electronic circuit boards housed in the chassis, so that the electronic circuit boards are not accessible via the test connector.

A third aspect of the present invention provides a method to prevent tampering of one or more electronic circuit boards housed in a chassis. The method includes mating a test connector to a test port in the chassis to perform testing of one or more of the electronic circuit boards, breaking off at least an external portion of the test port from the chassis to form a broken test port and plugging fill material into receptacles of the broken test port to prevent further use of the receptacles in the broken test port. The fill material functions to break one or more of conductors that connect the test port with the electronic circuit boards during a tampering event.

A fourth aspect of the present invention provides a system to prevent tampering with one or more electronic circuits within a chassis. The system includes means for testing the electronic circuits via an interfacing adapter and an interface port and means for modifying the interface port after testing to impede a tampering event.

A fifth aspect of the present invention provides a method to prevent tampering with electronic circuit boards housed in a chassis. The method includes mating a standard test connector to an interface key, plugging the interface key into an interface port in the chassis, removing the interface key from the interface port after testing of the electronic circuit boards housed in the chassis, forming a fill material, and filling receptacles of the interface port with the fill material so that mechanically removing the fill material from one or more receptacles of the interface port renders interface port inoperative.

### In the Drawings:

Embodiments of the present invention can be more easily understood and further advantages and uses thereof more readily apparent, when considered in view of the description of the preferred embodiments and the following figures in which;
Figure 1 is a block diagram of a first embodiment of an anti-tamper system in accordance with the present invention.
Figure 2 is an oblique view of an embodiment of an interface port of the anti-tamper system.
Figure 3 is an oblique view of an embodiment of an interface key of the anti-tamper system.
Figure 4 is a side view of the embodiment of the interface key of Figure 3.
Figure 5 is an oblique view of an embodiment of a test connector of the anti-tamper system.
Figure 6 is an oblique view of the embodiment of interface port of Figure 2, in which the receptacles are filled with fin material in accordance with the present invention.
Figure 7 is an enlarged view of an exemplary operable receptacle filled with fill material.
Figure 8 is a flow diagram illustrating a method to prevent tampering with electronic circuit boards housed in a chassis in accordance the invention.
Figure 9 is an enlarged view of an exemplary operable receptacle in which the fill material has been mechanically removed,
Figure 10 is a second embodiment of an anti-tamper system in accordance with the present invention.
Figure 11 is an enlarged side view of an exemplary test port mated with a test connector.
Figure 12 is an enlarged view of the exemplary receptacle after the test port is broken off in accordance with the present invention.
Figure 13 is an enlarged view of an exemplary operable receptacle in which a portion of the broken test connector of Figure 12 has been mechanically removed.
Figure 14 is a flow diagram illustrating a method to prevent tampering with electronic circuit boards housed in a chassis in accordance with the present invention.

In accordance with common practice, the various described features are not drawn to scale but are drawn to emphasize features relevant to the present invention. Reference characters denote like elements throughout figures and text.

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

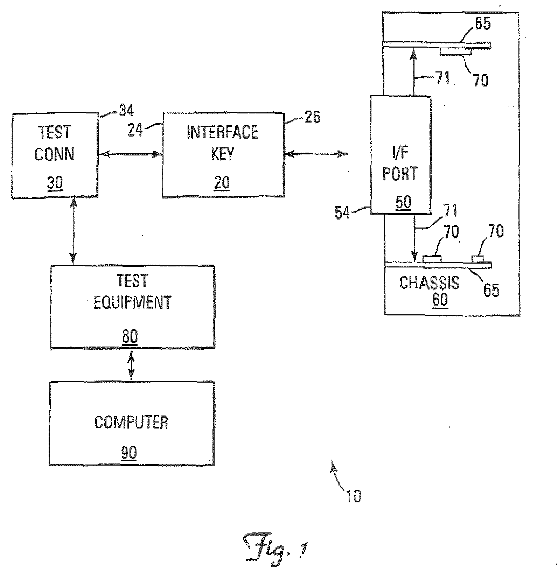

Figure 1 is a block diagram of a first embodiment of an anti-tamper system 10 in accordance with the present invention. The anti-tamper system 10 includes an interface key 20, an interface port 50, and a test connector 30. The interface port 50 is in a chassis 60 that houses one or more electronic circuit boards 65. An external face 54 of the interface port 50 faces outwardly from the chassis 60. As shown in Figure 1, the electronic circuit boards 65 support one or more devices 70. The electronic circuit boards 65 and devices 70 are in electrical communication with the interface port 50 via conductor 71. Conductor 71 can be a trace line on a circuit board, conductive wires, lead lines and the like. The electronic circuit boards 65 and devices 70 in the chassis 60 are adapted to be tested by test equipment 80 via the test connector 30 when the test connector 30 is mated with the interface key 20 which is mated with the interface port 50.

The interface key 20 includes a first surface 24 and a second surface 26 shown in Figure 1. The interface key 20 mates with a surface 34 of test connector 30 at the first surface 24 of the interface key 20. The interface key 20 mates with the interface port 50 in the chassis 60 at the second surface 26 of the interface key 20. In this manner the interface key 20 is an interfacing adapter positioned between the test connector 30 and the interface port 50 and operable to test electronic circuits.

As shown in Figure 1, the test equipment 80 is in communication with a computer 90 to one of control the test equipment, and/or store data from the test equipment 80. In one embodiment of ami-tamper system 10, the test equipment 80 is representative of more than one piece of test equipment. As used herein, electronic circuit board refers to electronic circuits in an electronic circuit board, electronic circuits on an electronic circuit board, as well as devices electrically connected to the electronic circuit boards. As defined herein, devices electrically connected to the electronic circuit boards include electronic devices, electro-optic devices, micro-electro-mechanical system (MEMS) devices, acoustic devices, acousto-optic devices, and the like.

In one implementation of this embodiment, the electronic circuit board 65 is a proprietary board that requires protection from tampering via the interface port 50. As defined here a tampering event occurs when a reverse engineer probes or attempts to probe the receptacles of a port, such as an interface port 50, in a chassis 60 in order to input and output various signals including voltages and/or currents. The reverse engineer tries to use the inputs and outputs to determine the circuit designs of circuits connected to the port in the chassis 60. As used herein, the terms "a tampering event" and "a tampering with" are interchangeable.

In another implementation of this embodiment the device 70 is a proprietary device that requires protection from tampering via the interface port 50. In yet another implementation of this embodiment, the electronic circuit board 65 and the device 70 include proprietary technology and require protection from tampering via the interface port 50. In yet another implementation of this embodiment of the anti-tamper system 10, the test equipment 80 includes more than one piece of test equipment. In yet another implementation of this embodiment of the anti-tamper system 10, the test connector 30 is a connector designed to mate with one of a port designed according to a standards body, a port designed for one or more proprietary protocols, a test access port, a Joint Test Access Group (JTAG) port, and an Ethernet port.

In yet another implementation of this embodiment of the anti-tamper system 10, the test connector 30 is designed to mate with an interface port that was originally located in the chassis 60 before the original interface port was replaced with the interface port 50 designed to interface with the interface key 20.

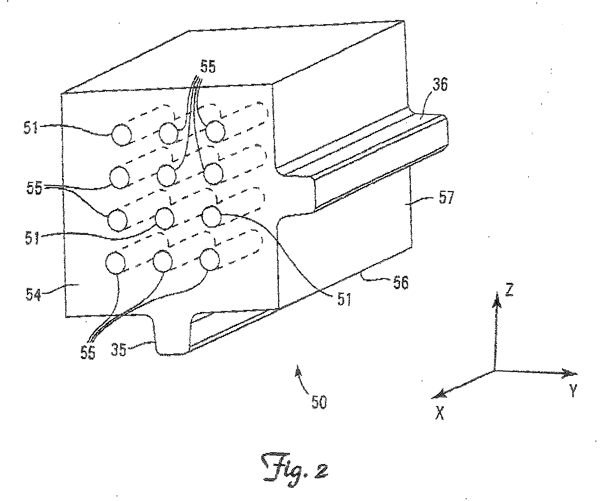

Figure 2 is an oblique view of an embodiment of an interface port 50 of the anti-tamper system 10. The external face 54 of the interface port 50 includes two types of receptacles: operable receptacles 55 and dummy receptacles 51. The operable receptacles 55 and dummy receptacles 51 are all adapted to receive pins from a mating connector, such as interface key 20. Operable receptacles 55 include connections via conductor 71 (Figure 1) to one or more of the electronic circuit boards 65 and/or the devices 70 so that one or more electronic circuit boards 65 in the chassis 60 are adapted to be tested via the test connector 30, the interface key 20 and the interface port 50.

Dummy receptacles 51 are not connected to one or more of the electronic circuit boards 65 and/or the devices 70. In one implementation of this embodiment of interface port 50, the dummy receptacles 51 are connected to a decoy circuit board that incudes decoy circuits designed to confuse anyone probing the interface port 50 to reverse engineer the electronic circuit boards 65 and devices 70 within the chassis 60. In this manner, the dummy receptacles in the interface port obfuscate tampering by another who does not know the design of the interface port 50. A port that includes dummy receptacles is a non-standard port.

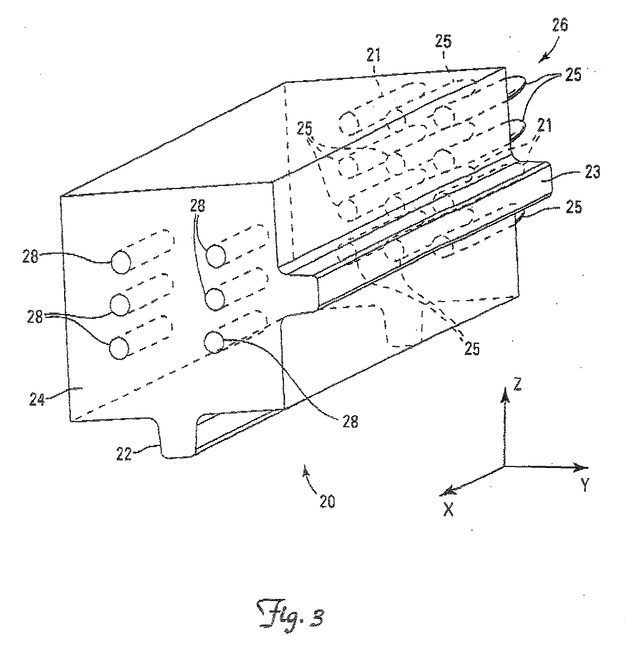

As shown in Figure 2, an orientation key 35 protrudes from a bottom surface 56 of the interface port 50. The bottom surface 56 is in the plane defined by the X and Y vectors. An orientation key 36 protrudes from a side surface 56 of the interface port 50. The side surface 56 is parallel to the plane defined by the X and Z vectors. The orientation keys 35 and 36 indicate how the interface key 20 is operably oriented to the interface port 50. Interface port 50 and interface key 20 are oriented to mate when the orientation key 22 and orientation key 23 (Figure 3) are aligned with the orientation key 35 and orientation key 36, respectively. Other types of keys are possible. Other types of orienting techniques are possible.

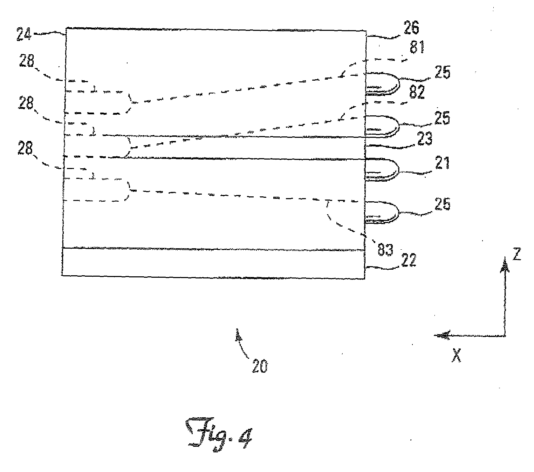

Figure 3 is an oblique view of an embodiment of an interface key 20 of the anti-tamper system 10. Figure 4 is a side view of the embodiment of the interface key 20 of Figure 3. Two types of pins protrude from the second surface 26 of interface port 50: operable pins 25 and dummy pins 21. Operable pins 25 are shaped and positioned to mate with the operable receptacles 55 in the interface port 50 in a manner that provides electrical communication between them. Dummy pins 21 are shaped and positioned to mate with the dummy receptacle 51 when the orientation key 22 and orientation key 23 are aligned with the orientation key 35 and orientation key 36, respectively. Operable pins 25 look like the dummy pins 21.

The first surface 24 of the interface port 20 includes operable receptacles 28. The operable receptacles 28 are all adapted to receive pins from a mating connector, such as test connector 30. Each operable receptacle 28 is electrically connected to a respective operable pin 25 as indicated by electrical wires 81, 82 and 83. Dummy pins 21 are not electrically connected to any operable pins 25.

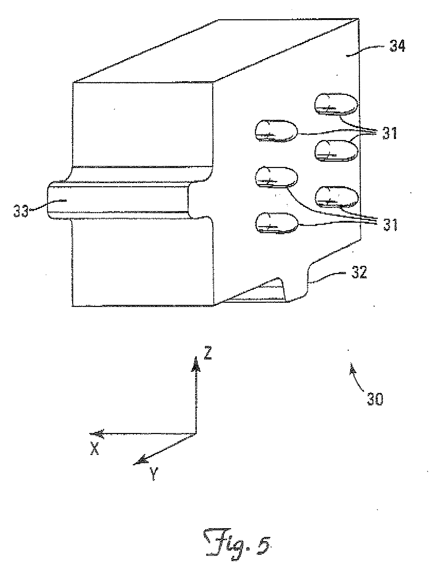

Figure 5 is an oblique view of an embodiment of a test connector 30 of the anti-tamper system 10. Operable pins 31 protrude from the surface 34 of test connector 30. Operable pins 31 are shaped and positioned to mate with the operable receptacle 28 in the interface key 20 in a manner that provides electrical communication between them when the orientation key 22 and orientation key 23 are aligned with the orientation key 32 and orientation key 33, respectively.

When test connector 30 mates with interface key 20, operable pins 31 are mated with receptacles 28. When interface key 20 mates with interface port 20 operable pins 25 are mated with operable receptacle 55 and dummy pins 21 are mated with dummy receptacle 51.

When interface key 20 mates with test connector 30 and with interface port 20, one or more electronic circuit boards 65 in the chassis 60 are adapted to be tested via the test connector 30, the interface key 20 and the interface port 50 if the test equipment 80 is in communication with the test connector 30. Once the testing of the electronic circuit boards 65 is completed, the chassis 60 including the electronic circuit boards 65 is delivered to a customer. The dummy receptacles 51 in the interface port 50 obfuscate tampering of protected electronic circuit boards 65 housed in the chassis 60 by someone, such as a customer, who does not know details about the design of the interface port. In some cases, the customer receive the interface key 20 and the customer performs the testing of the electronic circuit boards 65 in the chassis 60 prior to sending the electronic circuit boards 65 in the chassis 60 to another customer.

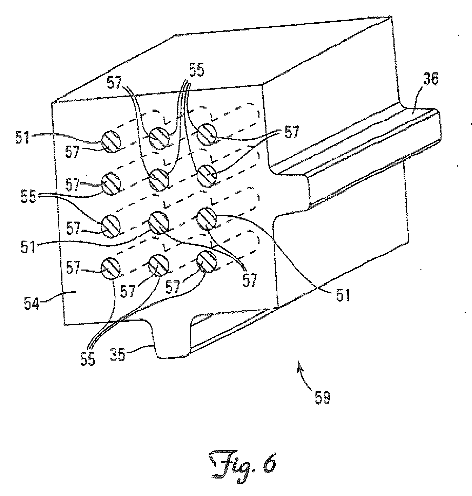

Figure 6 is an oblique view of an embodiment of interface port 59 of Figure 33, in which the receptacles are filled with fill material 57 in accordance with the present invention. In this embodiment, the operable receptacles 55 and dummy receptacles 51 of the interface port 59 are filled with a fill material 57. In one case, the operable receptacles 55 and dummy receptacles 51 are filled with a fill material 57 after the electronic circuit boards 65 in the chassis 60 are tested and before the chassis 60 is shipped to a customer.

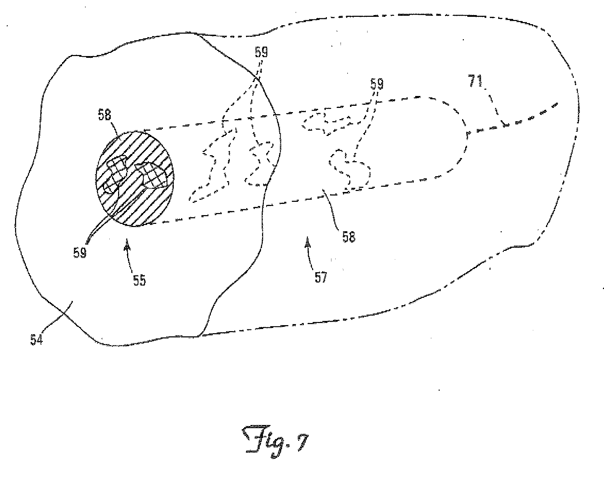

Figure 7 is an enlarged view of an exemplary operable receptacle 55 filled with fill material 57. As seen in Figure 7, the fill material 57 includes a first material 58 and a second material 59. In this exemplary case, the second fill material 59 is embedded in the first fill material 58. The conductor 71 is seen in electrical communication with the operable receptacle 55.

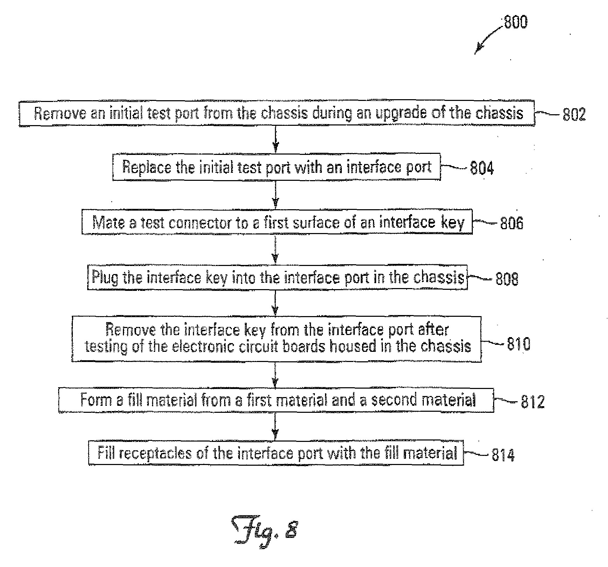

Figure 8 is a flow diagram 800 illustrating a method to prevent tampering with electronic circuit boards 65 housed in a chassis 60 in accordance with the present invention. Flow diagram 800 is described with reference to the interface port 50, the interface key 20 and the lest connector 30 as shown in Figures 1-7.

In this embodiment of flow diagram 800, blocks 802 and 804 are applicable to a chassis that has an original or initial test port that mates with a test connector 30 as above with reference to Figure 1. At block 802, an initial test port is removed from the chassis during an upgrade of the chassis 60. In one implementation of the block 802, the initial test port is a Joint Test Access Group (JTAG) port. In another implementation of the block 802, the initial test port is one of a port designed according to a standards body, a pon designed for one or more proprietary protocols, a test access port, and an Ethernet port. In yet another implementation of the block 802, the chassis is received from a customer for testing, calibration and/or upgrades, including hardware and/or software upgrades. At block 804, the initial test port is replaced with an interface port 50. At this point the chassis is now equivalent to the chassis 60 in Figure 1. Electrical communication between the operable receptacle 55 (Figure 7) and the electronic circuit boards 65 (Figure 1) within the chassis 60 is established via conductor 71 during the installation of the interface port 50.

At block 806, the test connector 30 is mated to the first surface 24 of interface key 20. Specifically, the interface key 20 mates with a surface 34 of a test connector 30 at the first surface 24 of the interface key 20. In this case in which block 802 and 804 are implemented, the test connector 30 was operable to mate with the original or initial test port that was on the chassis before it was modified at blocks 802 and 804, In one embodiment of flow diagram 800, the interface key 20 is plugged into interface port 50 and then the test connector 30 is mated to the interface key 20,

At block 808, the interface key 20 is plugged into the interface port 50 in the chassis 60. Specifically, the interface port 50 in the chassis 60 mates with the interface key 20 at the second surface 26. If test equipment is connected to the test connector 30, the electronic circuit boards 65 and the devices 70 on the electronic circuit board 65 can be tested via the test connector 30, the interface key 20 and the interface port 50. Any required testing can occur at this point in the method. After the testing of the electronic circuit board 65 is completed, the interface key 20 is removed from the interface port 50 (block 810).

Blocks 812-814 describe additional Steps that can be taken to prevent access by a reverse engineer to the electronic circuit boards 65 that include proprietary technology, such as devices 70. At block 812, a fill material 57 is formed from a first material 58 and a second material 59.

At block 814, the operable receptacles 55 and the dummy receptacles 51 in the interface port 50 are filled with the fill material 57. If a reverse engineer tries to reverse engineer the one or more of the electronic boards 65 in the chassis 60 using the interface port 50, one or more of the electronic circuit boards 65 is rendered inoperative during the tampering event that includes a mechanical removing of the fill material 57 from one or more of the operable receptacles 55 and the dummy receptacles 51.

During a tampering event, the fill material 57 is mechanically removed from one or more of the operable receptacles 55 and the dummy receptacles 51 in the interface port 50. In one embodiment, a reverse engineer is not aware that some of the receptacles are dummy receptacles 51. In another embodiment, a reverse engineer is aware that some of the receptacles are dummy receptacles 51 but the reverse engineer does not know which receptacles are dummy receptacles 51. Thus, the reverse engineer drills all of the receptacles in order to try to electrically probe the electronic circuit board 65.

In one exemplary case, the first material is a chemical resistant polymer PSS-738 that is commercially available from Ameron International and the second material is a hard filler material such as titanium carbide or cubic boron nitride. Titanium carbide is commercially available from HC Starck Engineered Materials or Praxair Specialty Materials. Cubic boron nitride is commercially available from Advanced Ceramic Materials. When PSS-738 is mixed with titanium carbide and/or cubic boron nitride a fill material 57 is formed that is difficult to drill and difficult to chemically etch. Such a fill material 57 renders the interface port 50 inaccessible during the tampering event on the one or more electronic circuit boards 65. Other material combinations are possible that are also impervious to drilling and chemical etching.

In one embodiment of block 812, the fill material 57 is formed from a single material that, upon mechanical removal, damages the connection formed by conductors 71 (Figures 1 and 7) between the interface port 50 and at least one electronic circuit board 65 thereby preventing access to at least one electronic circuit board 65. For example, one or more connections are formed from a material that is damaged by removal of the fill material 57. The damage prevents later connection via the interface port 50 connection. In an exemplary case, vibrations generated responsive to the removal of the fill material 57 are operable to break the connections formed by conductors 71 between the operable receptacles 55 and at least one electronic circuit board 65 thereby preventing access to at least one electronic circuit board 65.

In another embodiment of block 812, the fill material 57 is formed from a single material that, upon mechanical removal, damages the interface port 50 thereby preventing access to at least one of the electronic circuit boards 65. In an exemplary case, the operable receptacles 55 are broken during the mechanical removal of the fill material 57 removing the connection between the operable receptacle 55 and the electronic circuit board 65.

Sub-combinations of the blocks in the flow diagram 800 illustrating a method to prevent tampering with electronic circuit boards 65 housed in a chassis 60 are operable to prevent tampering in accordance with the present invention.

For example one embodiment of a method to prevent tampering includes blocks 802-810. In this case, a chassis having a standard port is updated and tested with an Interface port 50 that obfuscates efforts by reverse engineers to determine details about the technology on the electronic circuit boards 65.

Another embodiment of a method to prevent tampering includes blocks 806-810. In this case, the design interface port 50 that was originally added to the chassis 60 includes dummy receptacles 51 designed to confuse efforts by reverse engineers to determine details about the technology on the electronic circuit boards 65.

In yet another embodiment of a method to prevent tampering, the testing is done before stage 802. In this case, a chassis having a standard port is tested and then updated with an interface port 50 that includes a dummy receptacle 51 that confuses efforts by reverse engineers to determine details about the technology on the electronic circuit boards 65.

In yet another embodiment of a method to prevent tampering, a chassis having a standard port is upgraded with an interface port 50 that is filled with the fill material 57 but the electronic circuit boards 65 are not tested during the interface port 50 upgrade.

Thus by implementing one or more of the various embodiments described above, electronic circuits within a chassis are tested via an interfacing adapter and an interface port, the interfacing is removed, and the port is modified to impede a tampering event after the testing is completed.

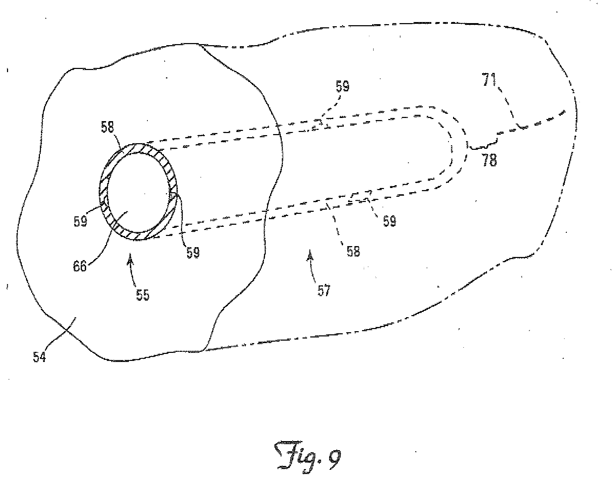

Figure 9 is an enlarged view of an exemplary operable receptacle 54 in which the fill material 57 formed from firs material 58 and second material 59 has been mechanically removed. The vibrations generated responsive to the removal of the fill material are operable to break the connections formed by conductors 71, as shown in Figure 9, so that a gap 78 is formed between the operable receptacle 55 and the conductors 71 when the material forming the conductor 71.

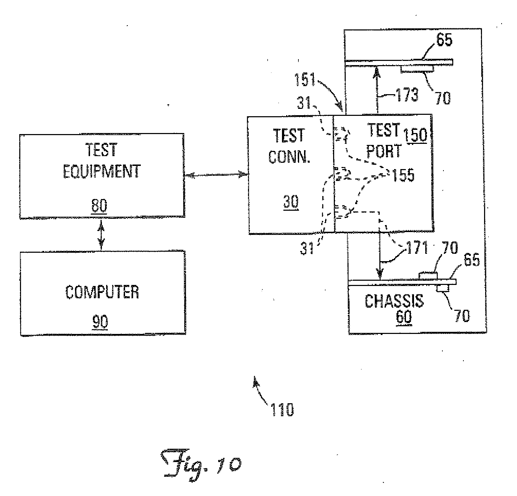

Figure 10 is a second embodiment of an anti-tamper system 110 in accordance with the present invention. The anti-tamper system 110 includes a test port 150 and a test connector 30. The test connector 30 includes pins 31 which fit the receptacles 155 in the test port 150. The receptacles 155 are all adapted to receive pins 31 from a mating test connector 30. An external portion 151 of the test port 150 extends outside the chassis 60. Operable receptacles 155 include connections via conductor 171 to one or more of the electronic circuit boards 65 and/or the devices 70 so that one or more electronic circuit boards 65 in the chassis 60 are adapted to be tested via the test connector 30, and the test port 150.

The test port 150 is in a chassis 60 that houses one or more electronic circuit boards 65. The test port 150 is one of a port designed according to a standards body, a port designed for one or more proprietary protocols, a test access port, a JTAG port, and an Ethernet port. The test connector 30 is a connector designed to mate with one of a port designed according to a standards body, a port designed for one or more proprietary protocols, a test access port, a JTAG port, and an Ethernet port.

As shown in Figure 10, the electronic circuit boards 65 support one or more devices 70. The electronic circuit boards 65 and devices 70 are in electrical communication via conductor 171 with the test port 150. The electronic circuit boards 65 and devices 70 in the chassis 60 are adapted to be tested by test equipment 80 via the test connector 30 when the test connector 30 is mated with the test port 150. As shown in Figure 10, the test equipment 80 is in communication with a computer 90 and functions as described above with reference to Figure 1.

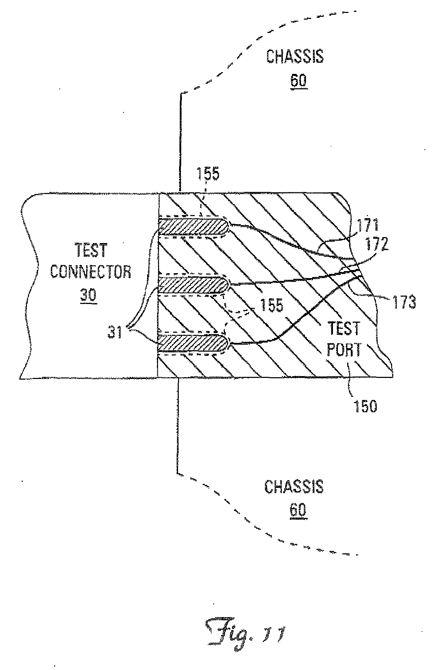

Figure 11 is an enlarged side view of an exemplary test port 150 mated with a test connector 30. As shown in Figure 11, the receptacles 155 are connected to conductors 171, 172, and 173, Conductors 171, 172, and 173 can be a trace line on a circuit board, conductive wires, lead lines and the like.

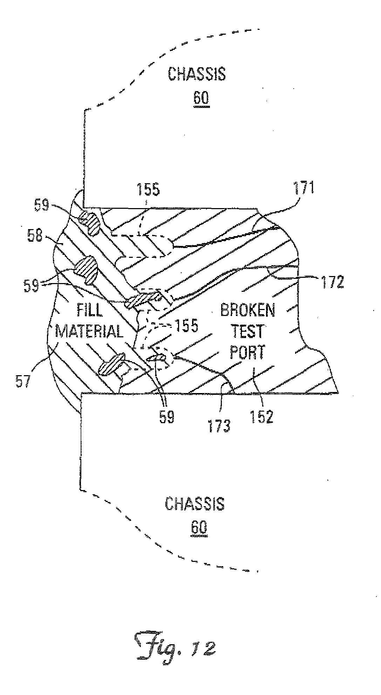

Figure 12 is an enlarged view of the exemplary receptacle 155 after the test port 150 is broken off in accordance with the present invention. In order to prevent a tampering event, at least the external portion 151 of the test port 150 is broken off from the chassis to form a broken test port 152. Then fill material 57 is plugged into receptacles 155 of the broken test port 152 to prevent further use of the receptacles 155 in the broken test port 152. As shown in Figure 12, the fill material 57 includes a first material 58 and a second material 59 as described above with reference to Figure 7.

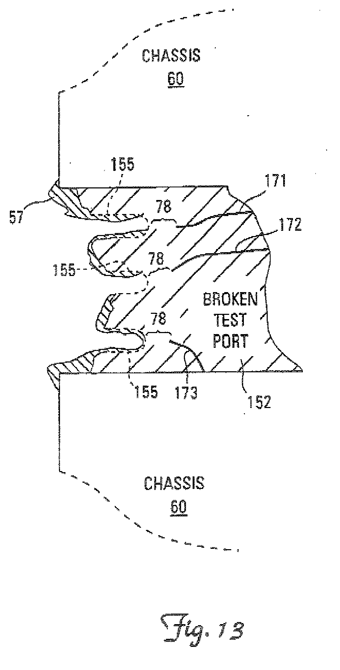

Figure 13 is an enlarged view of an exemplary receptacle 155 in which a portion of the broken test connector of Figure 12 has been mechanically removed. The mechanical removing is implemented according to one or more of the embodiments described above to remove the fill material 57 with reference to blocks 814 and 816 of flow diagram 800 in Figure 8.

In an exemplary case illustrated in Figure 13, a gap 178 is formed between the receptacles 155 and the conductors 171, 172 and 173 when the material forming the conductors 171, 172 and 173 breaks during drilling to mechanically remove the fill material 57.

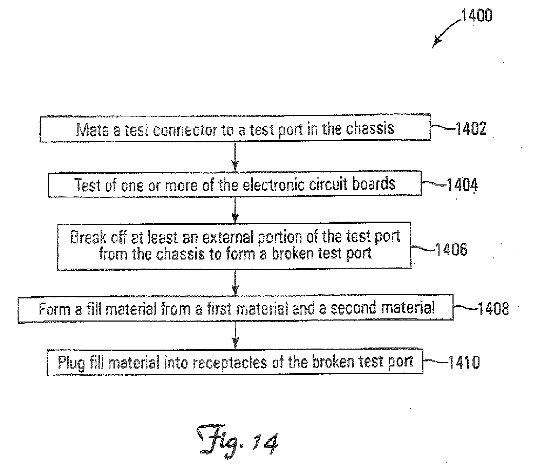

Figure 14 is a flow diagram 1400 illustrating a method to prevent tampering with electronic circuit boards 65 housed in a chassis 60 in accordance with embodiments of the present invention. Flow diagram 1400 is described with reference to the test connector 30 and the test port 150 as shown in Figures 10-13.

A test connector 30 is mated to a test port 150 (block 1402) and one or more of the electronic circuit boards 65 and/or devices 70 housed in a chassis 60 are tested (block 1404). After the testing is completed and before shipping the chassis 60 to a final customer, at least the external portion 151 of the test port 150 is broken off of the test port 150 and a broken test port 152 remains encased within the chassis 60 (block 1406). In one implementation of this embodiment, the external portion 151 of the test port 150 is sawed off at the external surface of the chassis 60. In another implementation of this embodiment, the external portion 151 of the test port 150 is knocked off of the chassis 60 with a chisel placed at the interface of the test port 150 and the external surface of the chassis 60. In yet another implementation of this embodiment, the external portion 151 of the test port 150 is polished down to the external surface of the chassis 60. Other manner of breaking the external portion 151 of the test port 150 from the test port 150 are possible.

At block 1408, a fill material 57 is formed from a first material 58 and a second material 59 as described above with reference to block 812 of flow diagram 800 in Figure 8. At block 1410, the receptacles 155 in the broken test pon 152 are filled with the fill material 57 in a manner similar to that described above with reference to block 814 of flow diagram 800 in Figure 8.

Thus by implementing one or more of the various embodiments described herein, one or more electronic circuits within a chassis are tested via a test port, the test port is broken after testing and access to the electronic circuits is preventing during a tampering event.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. An anti-tamper system 10 comprising:
an interface key 20 having a first surface 24 and a second surface 26, the interface key 20 adapted to mate with a test connector 30 at the first surface 24 and adapted to mate with an interface port 50 in a chassis 60 at the second surface 26, wherein one or more electronic circuit boards 65 in the chassis 60 are adapted to be tested via the test connector 30, the interface key 20 and the interface port 50, and wherein the interface port 50 includes dummy receptacles 51 that mate with dummy pins 21 in the interface key 20, the dummy receptacles 51 adapted to obfuscate a tampering event on protected electronic circuit boards 65 housed in the chassis 60.

2. The anti-tamper system of claim 1, wherein the test connector 30 is designed to mate with one of a port designed according to a standards body, a port designed for one or more proprietary protocols, a test access port, a Joint Test Access Group (JTAG) port and an Ethernet port.

3. The anti-tamper system of claim 1, further comprising:
a fill material 57, wherein the fill material 57 is adapted to fill the interface port 50 after completion of the testing of the one or more electronic circuit boards 65, and wherein the interface port 50 is rendered inaccessible during the tampering event on the one or more electronic circuit boards 65.

4. The anti-tamper system of claim 1, wherein upon removal of the fill material 57 from the interface port 50, the fill material 57 functions to break connections that connect the interface port 50 with the electronic circuit boards 65.

5. A method to prevent tampering with electronic circuit boards 65 housed in a chassis 60, the method comprising:
mating a test connector 30 to a first surface 24 of an interface key 20;
plugging the interface key 20 into an interface port 50 in the chassis 60, wherein a second surface 26 of the interface key 20 is adjacent to the interface port 50; and
removing the interface key 20 from the interface port 50 after testing of the electronic circuit boards 65 housed in the chassis 60, wherein the electronic circuit boards 65 are not accessible via the test connector 30.

6. The method of claim 5, wherein mating a test connector 30 comprises mating a test connector 30 that is designed to mate with one of a port designed according to a standards body, a port designed for one or more proprietary protocols, a test access port, a Joint Test Access Group (JTAG) port and an Ethernet port.

7. The method of claim 5, further including:
removing a test port 150 from the chassis 60 during an upgrade of the chassis 60; and
replacing the test port 150 with the interface port 50,

8. The method of claim 7, wherein removing a test port 150 comprises removing a test port 150 that is one of a port designed according to a standards body, a port designed for one or more proprietary protocols, a test access port, a Joint Test Access Group port and an Ethernet port.

9. A method to prevent tampering of one or more electronic circuit boards 65 housed in a chassis 60, the method comprising:
mating a test connector 30 to a test port 150 in the chassis 60 to perform testing of one or more of the electronic circuit boards 65;
breaking off at least an external portion of the test port 150 from the chassis 60 to form a broken test port 152; and
plugging fill material 57 into receptacles 155 of the broken test port 152 to prevent further use of the receptacles 155 in the broken test port 152, wherein the fill material 57 functions to break one or more of conductors 171 that connect the test port 152 with the electronic circuit boards 65.

10. A method to prevent tampering with electronic circuit boards 65 housed in a chassis 60, the method comprising:
mating a standard test connector 30 to an interface key 20;
plugging the interface key 20 into an interface port 50 in the chassis 60;
removing the interface key 20 from the interface port 50 after testing of the electronic circuit boards 65 housed in the chassis 60;
forming a fill material 57; and
filling receptacles 55 of the interface port 50 with the fill material 57, wherein mechanically removing the fill material 57 from one or more receptacles 50 of the interface port 50 readers interface port 50 inoperative.
